# FASCICULE DE BREVET EUROPEEN

(11) **EP 1 414 313 B1**
(45) Date de publication et mention de la délivrance du brevet: **02.11.2005**
(21) Numéro de dépôt: 02794625.0
(22) Date de dépôt: 12.08.2002
(51) Int. Cl.: A23L 1/22, A23L 1/09, A61K 47/26

(54) **COMPOSITION A STRUCTURE COMPOSITE CONTENANT DES SUBSTANCES SENSITIVES**
EMPFINDLICHE SUBSTANZEN ENTHALTENDE ZUSAMMENSETZUNG
COMPOSITE COMPOSITION CONTAINING SENSITIVE SUBSTANCES

(30) Priorité: 10.08.2001 FR 0110744
(43) Date de publication de la demande: 06.05.2004
(73) Titulaire: Fontarome, 95310 Saint Ouen l'Aumone (FR)
(72) Inventeur: LETAVERNIER, Jean-François, F-95420 Wy Dit Joly Village (FR); PILLOT, Alain, F-26260 Marges (FR)
(74) Mandataire: Casalonga, Axel
(86) Numéro de dépôt international: PCT/FR2002/002856
(87) Numéro de publication internationale: WO 2003/013273

(56) Documents cités:
- WO-A-00/25606
- WO-A-01/35764
- WO-A-93/23017
- WO-A-96/11589
- DE-A- 19 911 097
- FR-A- 2 665 613
- US-A- 4 582 716
- US-A- 4 849 225
- US-A- 5 709 876

## Description

La présente invention est relative à des compositions à structure composite contenant des substances aromatiques et/ou des substances non aromatiques volatiles et/ou sensibles aux agents extérieurs, ainsi qu'au procédé de fabrication de telles compositions.

Les arômes sont généralement des mélanges de plusieurs substances aromatiques, fragiles. En effet, ils présentent généralement un certain pourcentage de composés volatils et peuvent présenter également une sensibilité aux agents extérieurs tels que la lumière, l'air ou l'humidité. En outre, les arômes peuvent parfois interagir entre eux ou avec d'autres composants de produits alimentaires et entraîner une dénaturation de l'odeur ou du goût de ces produits dans lesquels ils sont contenus.

Par conséquent, on cherche à les conditionner pour les conserver sans altérer leurs propriétés organoleptiques et leur puissance, tout en assurant leur disponibilité en vue de leur utilisation pour l'aromatisation de produits divers.

Ces arômes sont généralement adsorbés sur des supports solides comme des sels, des sucres, des polysaccharides ou des poudres végétales. Cette option n'assure aucune stabilité des arômes.

L'alternative usuelle est de recourir à des techniques dites d'atomisation qui nécessitent la réalisation d'une émulsion de l'arôme à l'aide de polysaccharides et/ou de gommes dispersés dans l'eau. Cette émulsion est séchée par pulvérisation dans un courant d'air chaud. On obtient ainsi des particules renfermant les arômes, prêtes à l'emploi dans des formulations alimentaires. Ces produits sont parfois dénommés arômes encapsulés ou atomisés.

De tels produits sont par exemple décrits dans WO 01/35764. En effet, ce document décrit une composition séchée par pulvérisation, comprenant au moins un composé actif encapsulé dans une matrice amorphe.

Cependant, les arômes atomisés ainsi préparés et bien connus dans la technique présentent des inconvénients tels qu'une perte substantielle en substances aromatiques volatiles, ce qui déséquilibre l'arôme obtenu par rapport aux performances sensorielles de l'arôme de départ.

En outre, ces arômes atomisés présentent une courte durée de vie qui n'excède pas trois mois à 5 mois pour des formulations à base d'arômes d'agrumes par exemple ; de plus les éventuelles incompatibilités entre composants de l'arôme ne sont nullement évitées.

Des documents WO 96/11589 et WO 00/25606 sont encore connues des compositions sous la forme de matériau amorphe dans lequel est piégé un arôme.

La demanderesse a découvert de manière surprenante que l'association de substances aromatiques et/ou de substances non aromatiques volatiles et/ou sensibles aux agents extérieurs, à un agent émulsifiant spécifique, et la dispersion de cette association dans des mélanges d'hydrates de carbone d'une phase amorphe vitreuse et de composés cristallins permettaient d'obtenir des propriétés de conservation et de compatibilité nettement améliorées pour lesdites substances.

En effet, cette incorporation, dans la phase amorphe vitreuse, de cristaux et cette association contribuent en particulier à une amélioration significative du taux d'inclusion des substances volatiles de l'arôme, une aptitude au refroidissement du produit extrudé améliorée, une texture finale extrêmement résistante, et une hygroscopicité réduite par rapport aux arômes fixés de l'art antérieur, et ce sans élévation importante des températures de sortie d'extrudeuse, qui auraient pu détruire ou volatiliser une grande partie des substances à incorporer, ceci quelle que soit la taille de la filière, de 10 mm à 0,5mm.

Cette composition à structure composite selon l'invention permet donc de fixer lesdites substances et en particulier de les piéger, et ainsi de minimiser leur dégradation au cours du temps et de surmonter leurs éventuelles incompatibilités vis-à-vis d'autres composants de produits alimentaires tels que les préparations pour plats cuisinés, les potages, les sauces, les produits laitiers, les confiseries, les pâtisseries ou les salaisons.

En outre, cette composition à structure composite présente une durée de conservation nettement supérieure à celles de l'art antérieur contenant des substances aromatiques, qui peut atteindre quelques années, et ce sans distorsion du profil aromatique en nature et puissance, ce qui constitue un net avantage par rapport aux procédés classiques.

Par conséquent, cette composition à structure composite permet donc de surmonter les inconvénients cités ci-dessus.

L'invention a donc comme objet une composition de structure composite comprenant une première phase amorphe d'hydrates de carbone ayant une température de transition vitreuse supérieure à la température ambiante, une deuxième phase cristalline et une troisième phase constituée d'au moins une substance choisie parmi les substances aromatiques, les substances non aromatiques volatiles et/ou sensibles aux agents extérieurs et leurs mélanges, dispersée à l'aide d'agents émulsifiants dans les deux autres phases.

Un autre objet de l'invention concerne le procédé de fabrication de ces compositions.

L'invention a également pour objet l'utilisation de cette composition comme support pour le stockage et la conservation d'arômes et de substances sensibles aux agents extérieurs, alimentaires, pharmaceutiques ou cosmétiques, ainsi que dans des produits alimentaires tels que cités ci-dessus.

D'autres objets, caractéristiques, aspects et avantages de l'invention apparaîtront encore plus clairement à la lecture de la description et des divers exemples qui suivent.

La composition de structure composite, objet de l'invention, comprend :
(1) une première phase amorphe d'hydrates de carbone ayant une température de transition vitreuse supérieure à la température ambiante, de préférence supérieure à 30 °C,
(2) une deuxième phase cristalline, et
(3) une troisième phase constituée d'au moins une substance choisie parmi les substances aromatiques, les substances non aromatiques volatiles et/ou sensibles aux agents extérieurs et leurs mélanges, dispersée à l'aide d'au moins un agent émulsifiant dans les deux autres phases.

Par température ambiante, on entend une température d'environ 20 à 25 °C.

La première phase, amorphe comprend de préférence une maltodextrine présentant un dextrose équivalent (DE) généralement compris entre 1 et 20, de préférence entre 5 et 18 et mieux encore entre 11 et 14 ; ou un mélange de sucres simples tels que le glucose ou le maltose, et d'oligosaccharides ou de polysaccharides comme l'amidon, l'amidon modifié, la gomme arabique, la gomme de guar, le caroube, ou les carraghénanes.

On utilise plus particulièrement la maltodextrine de DE 11 à 14 commercialisée notamment par la société Roquette sous la dénomination Glucidex 12.

La deuxième phase, cristalline comprend de préférence du mannitol, une cyclodextrine, un sel, par exemple, du chlorure de sodium ou du carbonate de calcium, l'acide glutamique ou un de ses sels de métal alcalin ou alcalino-terreux, par exemple le glutamate monosodique, ou leurs mélanges. On peut utiliser plus particulièrement les mannitols commercialisés par la société Roquette ou les alpha-, bêta- ou gamma-cyclodextrines et leurs dérivés méthylés ou hydroxy-propylés.

Les phases amorphe et cristalline constituent de préférence de 60 à 90 % du poids total de la composition. Le rapport pondéral de la phase amorphe à la phase cristalline est généralement compris entre 50:50 et 70:30.

La troisième phase représente généralement de 5 à 40 % du poids total de la composition.

Cette troisième phase est constituée par au moins une substance choisie parmi les substances aromatiques, les substances non aromatiques volatiles et/ou sensibles aux agents extérieurs tels que l'air, l'humidité ou la lumière, et leurs mélanges.

Comme substance aromatique convenant particulièrement dans l'invention, on peut notamment citer les huiles essentielles comme, par exemple, l'huile essentielle d'orange, de citron, de mandarine ou de menthe ; les oléorésines telles que les oléorésines de poivre, de muscade ou de piments ; les substances aromatisantes naturelles ou synthétiques telles que la vanilline, l'éthylvanilline, le menthol, l'eucalyptol, le camphre, les extraits de réglisse, de crabe ou de café ; les épices et aromates tels que le poivre, les piments ou le thym ; les agents de sapidité tels que les sels, le glutamate ; les édulcorants comme l'aspartame ; et leurs mélanges.

A titre d'exemples de substance non aromatique volatile et/ou sensible aux agents extérieurs, on peut notamment citer les extraits naturels tels que les composés polyphénoliques et les anthocyanes ; les composés soufrés tels que les sulfures organiques, par exemple, le sulfure de diméthyle, les acides aminés soufrés comme la cystéine et la méthionine ; les actifs à usage pharmaceutique comme l'acide ascorbique et les salicylates de méthyle et d'amyle ; les lipides contenant des acides gras insaturés comme les huiles de poisson, d'onagre ou de bourrache, et leurs mélanges.

Ces substances sont dispersées à l'aide d'au moins un agent émulsifiant. A titre d'exemples d'agents émulsifiants convenant particulièrement dans la présente invention, on peut notamment citer les phospholipides (par exemple E322) tels que la phosphatidyl-choline, la phosphatidyl-sérine, la phosphatidyl-éthanolamine, par exemple, la lécithine de soja, la lécithine de colza ; les mono- ou diglycérides d'acides gras en C₁₀-C₂₀, et de préférence les mono et diglycérides d'acides gras en C₁₄/C₁₈ commercialisés sous la dénomination Myverol® (E471) par Eastman Kodak ; les esters de glycérol tels que E472 ; les sucroglycérides tels que E474 ; les esters polyglycériques tels que E475 ; les polyricinoléates tels que E476 ; les esters de propanediol tels que E477 ; les lactates de stéaroyle tels que E481 et E482; les esters de sorbitane tels que E491, E492 et E495 ; et leurs mélanges.

Les agents émulsifiants sont généralement présents dans des proportions inférieures à 1 % en poids, de préférence comprises entre 0,2 et 0,6 % en poids par rapport au poids total de la composition.

L'association d'agents émulsifiants et d'au moins une substance choisie parmi les substances aromatiques, les substances non aromatiques volatiles et/ou sensibles aux agents extérieurs, qui est lipophile, hydrophile ou amphiphile, conduit à un produit amphiphile.

La composition selon l'invention peut également contenir de l'eau dans des proportions faibles, de préférence comprises entre 1 et 20 % en poids, mieux encore inférieures à 5 % en poids par rapport au poids total de la composition. Cette proportion d'eau vient s'ajouter à l'eau intrinsèquement présente dans les composants des phases amorphes et cristallines mentionnés ci-dessus.

La composition conforme à l'invention peut contenir en outre des matières grasses telles que des triglycérides d'acides gras en C₈-C₂₀ et en particulier un mélange de triglycérides d'acides gras végétaux saturés en C₈/C₁₀ comme le produit commercialisé sous la dénomination Miglyol® 812 (E 471) (Société Huls). L'emploi de matières grasses favorise en particulier le processus d'extrusion.

Ces matières grasses peuvent être utilisées dans des proportions ne dépassant pas 10 % en poids par rapport au poids total de la composition.

Les compositions conformes à l'invention peuvent également comprendre en outre un ou plusieurs polyols, tels que par exemple, le propylèneglycol, le glycérol ou des alcools alcoxylés tels que des polyalkylèneglycols, par exemple, les polyéthylèneglycols ou les copolymères d'oxyde d'éthylène et d'oxyde de propylène.

Ces polyols jouent le rôle de plastifiants, en d'autres termes ils abaissent la température de transition vitreuse de la fraction fusible des composants de la phase amorphe, et augmentent la compatibilté entre la phase amorphe et la phase cristalline dispersée.

Lorsqu'ils sont présents dans la composition, leur quantité est notamment comprise entre 1 et 10 % en poids, de préférence entre 2 et 5 % en poids par rapport au poids total de la composition.

Un mode de réalisation particulier de l'invention consiste en ce que la composition ne comprend pas d'eau ajoutée et comprend au moins un polyol tel que décrit ci-dessus.

Un autre objet de la présente invention consiste en un procédé de fabrication des compositions à structure composite selon l'invention, telles que décrites ci-dessus.

Le procédé de fabrication selon la présente invention comprend les étapes suivantes consistant à :
(a) d'une part, mélanger les poudres d'hydrates de carbone de la phase amorphe et de composés cristallins tels que décrits ci-dessus ; par exemple, on mélange une maltodextrine avec du mannitol ou une cyclodextrine ou un sel, sous forme de poudres dans un mélangeur tel qu'un mélangeur à soc de charrue ;
(b) d'autre part, mélanger l'agent émulsifiant tel que décrit ci-dessus avec au moins une substance telle que décrite ci-dessus, choisie parmi les substances aromatiques, les substances non aromatiques volatiles et/ou sensibles aux agents extérieurs, et leurs mélanges, puis à ajouter l'eau, ou au moins un polyol liquide ou fusible dans les conditions du procédé, tel que décrit ci-dessus, ou un mélange eau/polyol(s) liquide(s) ou fusible(s) dans les conditions du procédé, de manière à former une émulsion,
(c) incorporer lentement sous agitation l'émulsion au mélange de poudres, et à
(d) procéder ensuite à l'extrusion du mélange de façon à obtenir à la sortie une composition à structure composite comportant une phase amorphe vitreuse, en particulier à base de maltodextrine, et une phase cristalline qui comprend en particulier des cristaux intacts de mannitol ou de cyclodextrine ou d'un sel, dans lesquelles est dispersée au moins une substance choisie parmi les substances aromatiques, les substances non aromatiques volatiles et/ou sensibles aux agents extérieurs, et leurs mélanges.

Dans l'étape (b), on réalise de préférence l'émulsion sous agitation à grande vitesse avec un dispositif tel que Polytron.

Selon un mode particulièrement préféré de l'invention, on ajoute l'eau, ou au moins un polyol liquide ou fusible dans les conditions du procédé, ou un mélange eau/ polyol(s) liquide(s) ou fusible(s) dans les conditions du procédé à la fin, sans émulsification préalable. Le procédé comprend alors les étapes suivantes consistant à :
(a) d'une part, mélanger les poudres d'hydrates de carbone de la phase amorphe et de composés cristallins tels que décrits ci-dessus,
(b')d'autre part, mélanger l'agent émulsifiant tel que décrit ci-dessus avec au moins une substance telle que décrite ci-dessus, choisie parmi les substances aromatiques, les substances non aromatiques volatiles et/ou sensibles aux agents extérieurs, et leurs mélanges,
(c') incorporer lentement sous agitation le mélange de l'étape (b') au mélange de poudres,
(d')ajouter l'eau, ou au moins un polyol liquide ou fusible dans les conditions du procédé, tel que décrit ci-dessus, ou un mélange eau/polyol(s) liquide(s) ou fusible(s) dans les conditions du procédé, et à
(e') procéder ensuite à l'extrusion du mélange de façon à obtenir à la sortie une composition à structure composite comportant une phase amorphe vitreuse et une phase cristalline, dans lesquelles est dispersée au moins une substance choisie parmi les substances aromatiques, les substances non aromatiques volatiles et/ou sensibles aux agents extérieurs, et leurs mélanges.

Un mode de réalisation particulier de l'invention consiste à conserver, à température ambiante, le mélange obtenu à l'étape (c) ou (d') pendant un à cinq jours, de préférence pendant 48 heures.

On observe alors un réarrangement physique du mélange, en d'autres termes on obtient un matériau solide compact, qui nécessite une étape supplémentaire de prébroyage avant l'extrusion de l'étape (d) ou (e'). Le matériau broyé présente notamment un taux de rétention élevé, par exemple, de 35 à 40 % environ de la quantité totale des substances aromatiques, des substances non aromatiques volatiles et/ou sensibles aux agents extérieurs.

Les étapes (a) à (c), et (a') à (d') sont effectuées à température ambiante.

De préférence, l'extrusion est réalisée à basse température, ce qui signifie que la température maximale à laquelle est porté le mélange de l'étape (c) ou (d'), se situe dans l'intervalle allant d'environ 100 à 140 °C.

Le mélange à extruder dans l'étape (d) ou (e'), est introduit à température ambiante dans l'extrudeuse, puis porté à une température comprise entre 100 et 140 °C, refroidi jusqu'à une température de 80-90 °C, puis extrudé à une température de 75 à 105 °C.

Le produit extrudé sous forme de joncs ou de pastilles est dur, casant, homogène, non expansé, peu odorant et non collant. Il est découpé à la sortie et refroidi.

Les produits obtenus après découpe sont durs avec une absence de fines. Ces produits découpés et broyés présentent des propriétés remarquables et inattendues, telles que conservation de l'arôme et non-hygroscopicité. Ces produits extrudés présentent également une structure d'émulsion solide.

L'analyse thermique différentielle de la composition selon l'invention, obtenue selon l'un des procédés tels que décrits ci-dessus, permet de constater l'existence d'une transition vitreuse à une température supérieure à la température ambiante (présence d'une phase à l'état vitreux) et d'un endotherme correspondant à la fusion des cristaux, par exemple du mannitol, ce qui correspond bien à l'existence d'un matériau composite : une phase vitreuse, une phase cristalline, une phase dispersée.

L'analyse thermogravimétrique montre successivement la perte de l'eau libre puis la perte des substances volatiles à une température largement supérieure à leur température d'ébullition sous pression atmosphérique, ce qui correspond à une rétention des substances volatiles jusqu'à désagrégation thermique du réseau solide qui les contient.

On peut évaluer le taux d'inclusion des substances aromatiques, par exemple, de la manière suivante.

Les substances aromatiques fixées, c'est-à-dire incluses et adsorbées, peuvent être dosées selon les méthodes bien connues de la pharmacopée européenne 2000, par exemple, par analyse chromatographique en phase gazeuse qualitative et quantitative ou par spectroscopie d'absorption UV globale des substances aromatiques.

Les résultats de ce dosage combinés à ceux du dosage des substances aromatiques simplement adsorbées, par exemple par lavage avec un solvant tel que l'hexane, permettent de calculer par différence la proportion de substances aromatiques effectivement piégées dans le matériau ou encore incluses, et d'en déduire le taux d'inclusion par rapport à la quantité de départ des substances aromatiques.

L'hygroscopicité peut être déterminée par la mesure de la teneur en eau selon la méthode de Karl Fischer qui permet de suivre la reprise en eau.

La recherche des produits de dégradation (par exemple, l'oxyde de limonène) est effectuée par chromatographie en phase gazeuse, voire par spectroscopie UV dans certains cas.

On peut encore déterminer la microstructure des compositions selon l'invention, par examen en microscopie électronique à balayage.

Par ailleurs, comparativement au même arôme traité par atomisation conventionnelle, la composition selon l'invention extrudée est globalement plus équilibrée que le produit atomisé, sans prédominance des notes de fond, plus fraîche, plus montante. La composition selon l'invention conduit à une libération de l'arôme aussi rapide, sinon plus rapide qu'un produit atomisé, tant dans l'eau froide que dans l'eau chaude.

La composition ainsi obtenue est particulièrement stable. Au bout de 18 mois à l'obscurité, à une température de +15 °C à +25 °C, la structure de la composition selon l'invention est inchangée, la teneur en arôme est inchangée, les tests de suivi de l'oxydation sont inchangés par rapport aux contrôles initiaux, les tests gustatifs sont équivalents en note et puissance par comparaison à un témoin conservé à -20 °C.

Les compositions selon l'invention sont notamment utilisées pour le stockage et la conservation d'arômes alimentaires ou pharmaceutiques, ainsi que dans des produits alimentaires tels que les préparations pour plats cuisinés, les potages, les sauces, les produits laitiers, les confiseries, les pâtisseries ou les salaisons.

Les compositions selon l'invention peuvent être également utilisées dans des compositions pharmaceutiques ou cosmétiques.

Les exemples suivants sont destinés à illustrer l'invention sans pour autant présenter un caractère limitatif.

### Exemple N°1

On prépare la composition suivante :

| | |
|---|---|
| Arôme orange (*) | 100g |
| Lécithine(**) | 5g |
| Eau | 43g |
| Maltodextrine DE 11-14 (***) | 426g |
| Mannitol(****) | 426g |

| | |
|---|---|
| (*) mélange d'huile essentielle d'orange et de substances aromatiques naturelles. | |
| (**) lécithine de soja, vendu sous la dénomination 'emulfluid « E » par la société Lucas-Meyer. | |
| (***) Glucidex® 12 (Société Roquette-Lestrem - France). | |
| (****) Mannitol 60 (Société Roquette). | |

Le mannitol et la malto-dextrine sont mélangés dans un mélangeur à poudres à soc de charrue (Lodige ou équivalent).

On ajoute à l'arôme orange la lécithine ; après dispersion complète, l'eau est ajoutée et l'émulsion est réalisée à l'aide d'un agitateur à grande vitesse (Polytron).

L'émulsion est incorporée lentement sous agitation au mélange des poudres. Dès ce stade, on observe une absorption significative des composants aromatiques sur le support : on constate en effet une réduction significative de l'odeur et une absorption homogène vérifiable visuellement et analytiquement (spectre UV des espèces dispersées, dosage des substances volatiles totales, chromatographie)

Un test courant consiste à déposer sur une feuille de papier, une faible quantité de la poudre obtenue, après quelques minutes de contact, on ne doit pas observer de traces grasses sur le papier.

Le mélange obtenu est introduit régulièrement dans un dispositif d'extrusion de type Bühler ou Clextral ou équivalent, doté d'un système à double vis. Les conditions d'extrusion sont indiquées ci-dessous.

| Fourreau N°1 (17cm environ) refroidi à l'eau de ville | |
|---|---|
| Fourreau N°2 | +76°C |
| Fourreau N°3 | +119°C |
| Fourreau N°4 | +80°C |
| Fourreau N°5 | +80°C |
| Température de sortie | +95°C |

Ces températures sont notablement plus basses que les températures usuelles et ce malgré la présence d'une phase cristalline importante.

Les joncs obtenus sont découpés dès la sortie de l'extrudeuse ce qui contribue à un refroidissement rapide. Le produit extrudé est homogène, exempt d'expansion, peu odorant, non collant.

La texture des produits obtenus acquiert en refroidissant une extrême dureté (de l'ordre de 180 Newtons) avec une absence de fines. Les résultats sont les suivants.

| | |
|---|---|
| Teneur en arôme | 9,8 % |
| Teneur en arôme non piégé | 0,3 % |
| Taux d'inclusion | 95 % |
| Teneur en eau | 4,1 % |
| Hygroscopicité très faible. | |

### Exemple N° 2

On prépare la composition suivante :

| | |
|---|---|
| Huile essentielle d'orange | 100g |
| Lécithine de soja | 5g |
| Eau | 40g |
| Malto-dextrine DE 11 à 14 | 600g |
| Mannitol | 255g |

On opère dans les mêmes conditions opératoires que celles de l'exemple N°1, à la différence qu'on a incorporé au mélange pulvérulent malto-dextrine/mannitol, le mélange huile essentielle et émulsifiant, puis l'eau ; on obtient ainsi une homogénéité excellente de la répartition des substances aromatiques et l'addition finale d'une très faible quantité d'eau contribue à donner une texture de type « semoule » extrêmement favorable pour l'alimentation de l'extrudeuse.

Dans le cas présent, les températures utilisées pour l'extrusion sont identiques à celles de l'exemple N° 1 à l'exception des suivantes :

| | |
|---|---|
| Fourreau N° 3 | +140°C |
| Fourreaux N^{os} 4 et 5 | +70°C |
| Température de sortie | +85°C |

On obtient les résultats suivants.

| | |
|---|---|
| Teneur en huile essentielle : | 9,8 % |
| Taux d'inclusion : | 98% |
| Teneur en eau : | 4,3 % |
| Hygroscopicité nulle | |

En ce qui concerne la conservation sur 24 mois, les conclusions sont identiques à celles de l'essai précédent.

En microscopie de fluorescence X, on observe une répartition uniforme de la lécithine.

### Exemple N°3

On prépare la composition suivante :

| | |
|---|---|
| Huile essentielle d'orange | 100g |
| Lécithine de soja | 5g |
| Eau | 43g |
| Malto-dextrine DE 11 à 14 | 426g |
| Mannitol | 426g |

Les conditions opératoires sont identiques à celles de l'exemple N°2. On obtient les résultats suivants :

| | |
|---|---|
| Teneur en huile essentielle | 8,7% |
| Teneur en huile essentielle libre | 0,74% |
| Taux d'inclusion | 79,6% |

### Exemple N°4

On prépare les compositions suivantes :

| | 4A | 4B |
|---|---|---|
| Huile essentielle d'orange bigarade | 100 g | 75 g |
| Lécithine de soja | 2,7 g | 2,7 g |
| Huile hydrogénée (*) | 0 g | 25 g |
| Eau | 40 g | 40 g |
| Mannitol | 257,2 g | 257,2 g |
| Malto-dextrine DE 11/14 | 600,1 g | 600,1 g |

| | | |
|---|---|---|
| (*) Miglyol® 812 (Societe Huls) : mélange de triglycérides d'acides gras végétaux saturés en C8/C10 | | |

On opère de la même manière que dans les exemples précédents pour le mélange des ingrédients ci-dessus ; dans le cas de l'essai 4B, le Miglyol® est ajouté au mélange huile essentielle et lécithine.

La composition est ensuite introduite dans un dispositif d'extrusion identique à celui de l'exemple N°1 et les paramètres d'extrusion sont indiqués ci-dessous.

| | 4A | 4B |
|---|---|---|
| Température des fourreaux | | |
| N°2 | 65°C | 65°C |
| N°3 | 117°C | 101°C |
| N°4 | 117°C | 102°C |
| N°5 | 94°C | 108°C |

| Température de sortie | | |
|---|---|---|
| | 93°C | 102°C |

On obtient des taux d'inclusion respectifs de 55 % et 81 % pour les exemples 4A et 4B.

### Exemple N°5

On prépare la composition suivante :

| | |
|---|---|
| Arôme citron (*) | 100g |
| Lécithine de soja | 5g |
| Eau | 40g |
| Mannitol | 255g |
| Malto-dextrine DE 11/14 | 600g |

| | |
|---|---|
| (*) mélange d'huiles essentielles et de substances aromatisantes naturelles. | |

Les conditions opératoires sont identiques à celles de l'exemple N° 2.

Les résultats sont excellents, ce qui est à souligner compte tenu de l'extrême fragilité de ce type de composition aromatique. On obtient les résultats suivants.

| | |
|---|---|
| Taux d'inclusion | 92% |
| Teneur en eau | 7% |

L'analyse sensorielle montre une conservation excellente après 12 mois (+15°/+25°C) qui est confirmée par l'analyse chromatographique : aucun produit d'oxydation n'est apparu.

### Exemple N°6

On prépare la composition suivante :

| | |
|---|---|
| Arôme mûre(*) | 92g |
| Lécithine desoja | 2,5g |
| Eau | 40g |
| Mannitol | 259,6g |
| Malto-dextrine DE 11/14 | 605,9g |

| | |
|---|---|
| (*) mélange de substances identiques aux naturelles : acides caprique, caproïque, butyrique, formique, isovalérianique, tiglique, valérianique, essence de myrrhe, eugénol, acetaldéhyde, phénylacétaldéhyde, hexanal, esters (acétates), alcools amylique, isoamylique, isobutylique et propylique, hexanol, gamma-delta-decalactones, sulfure de dimethyle, frambinone, hédione, ionones, maltol, furanéol, vanilline, damascone, ambrettolide. | |

Les conditions opératoires sont identiques à celles de l'exemple N°2. On obtient les résultats suivants.

| | |
|---|---|
| Taux d'inclusion | 89,7% |
| Teneur en eau | 6,7% |

Les conclusions sont strictement identiques à celles de l'exemple N°5 pour une durée de conservation identique.

### Exemple N°7

On prépare la composition suivante :

| | 7A | 7B |
|---|---|---|
| Arôme pêche (*) | 100 g | 100 g |
| Lécithine de soja | 2,5 g | 2,5 g |
| Propylène-glycol | 0 g | 20 g |
| Eau | 40 g | 20 g |
| Mannitol | 257,2 g | 257,2 g |
| Malto-dextrine DE 11/14 | 600,2 g | 600,2 g |

| | | |
|---|---|---|
| (*) mélange de substances aromatisantes identiques au naturel : acétates, hexanol, linalol, citronellol, géraniol, 2-isopropyl-4-méthylthiazole, acide acétique, acide butyrique, acide benzoïque, benzaldéhyde, anisaldéhyde, huiles essentielle de menthe, de citron, lactones en C₈-C₁₁. | | |

Les conditions opératoires sont identiques à celles de l'exemple N°2. On obtient les résultats suivants.

| | 7A | 7B |
|---|---|---|
| Taux d'inclusion | 93% | 88% |
| Teneur en eau | 7,5% | 8% |

La conservation est excellente après 10 mois à température ambiante.

### Exemple N°8

On prépare la composition suivante :

| | 8A | 8B |
|---|---|---|
| Huile essentielle d'orange | 100 g | 100 g |
| Myverol® (*) | 5 g | 5 g |
| Eau | 40 g | 40 g |
| Mannitol | 0 g | 127,5 g |
| Bêta-cyclodextrine | 255 g | 127,5 g |
| Malto-dextrine DE 11/14 | 600 g | 600 g |

| | | |
|---|---|---|
| (*) E 471-Mono et diglycérides d'acides gras en C₁₄/C₁₈ (Eastman-Kodak) | | |

Les conditions opératoires sont comparables à celles de l'exemple N°2. On obtient les résultats suivants.

| | 8A | 8B |
|---|---|---|
| Taux d'inclusion | 95% | 97% |
| Teneur en eau | 10,3% | 16% |

Le produit obtenu présente des performances comparables à celles de l'exemple 2 avec une excellente conservation sur 10 mois.

### Exemple N°9

On prépare la composition suivante :

| | 9A | 9B |
|---|---|---|
| Arôme tomate (*) | 6 g | 12 g |
| Miglyol® | 94 g | 40 g |
| Lécithine de soja | 2,5 g | 2,5 g |
| Eau | 40 g | 40 g |
| Mannitol | 257 g | 281 g |
| Malto-dextrine DE 11/14 | 600,5 g | 600,5 g |

| | | |
|---|---|---|
| (*) mélange de substances aromatisantes identiques au naturel, dont principalement: sulfure de diméthyle, acétyl-méthylcarbinol, hexanal, furfural, méthional, acétylfurane, benzaldélyde, linalol, terpinéol, acétylfurane, benzaldéhyde, linalol, terpinéol, citral, eugénol, ionones, damascone... | | |

Les conditions de mélange sont identiques à celles des exemples précédents pour le mélange des ingrédients des compositions et les paramètres d'extrusion sont indiqués ci-dessous.

| Températures des fourreaux | |
|---|---|
| N°2 | 61°C |
| N°3 | 104°C |
| N°4 | 104°C |
| N°5 | 93°C |
| Température de sortie | 98°C |

On obtient les résultats suivants.

| | 9A | 9B |
|---|---|---|
| Taux d'inclusion | 79% | 89% |
| Teneur en eau | 6,9% | 7,2% |

Cet exemple montre l'intérêt de l'invention en ce qui concerne la volatilité et la sensibilité aux agents extérieurs des composants de l'arôme.

Cette composition est difficile à atomiser sur les supports classiques. On observe alors un déséquilibre aromatique, une perte de puissance et la conservation ne dépasse pas 4 mois.

Dans le cas présent, la composition obtenue selon l'invention montre très peu d'altération par rapport au mélange de départ ce qui souligne non seulement l'intérêt gustatif mais également l'intérêt économique du procédé et du matériau revendiqué. Les données de conservation permettent d'envisager une stabilité satisfaisante sur 12 mois à température ambiante.

Par ailleurs l'emploi de cet arôme protégé au stade des traitements industriels (plats cuisinés, mélanges pour sauces et potages) montre une compatibilité très supérieure à celle des présentations classiques (atomisés ou granulés).

### Exemple N°10

On prépare la composition suivante :

| | |
|---|---|
| Vanilline | 120g |
| Lécithine de soja | 2,5g |
| Miglyol® | 2,5g |
| Eau | 40,5g |
| Mannitol | 234g |
| Malto-dextrine DE 11/14 | 600,5g |

On mélange le Miglyol® et la lécithine. On l'ajoute ensuite à la vanilline préalablement incorporée au mannitol et à la malto-dextrine, puis on ajoute l'eau.

Les paramètres d'extrusion sont indiqués ci-dessous.

| Température des fourreaux (°C) | |
|---|---|
| N°2 | 67 |
| N°3 | 100 |
| N°4 | 100 |
| N°5 | 78 |
| Température de sortie | 94°C |

On obtient les résultats suivants.

| | |
|---|---|
| Taux d'inclusion | 80 % |
| Teneur en eau | 7,1 % |

La vanilline (fusion +80/81°C-Merck Index 9e édition) subit au cours du procédé une fusion suivie d'un réarrangement : l'examen microscopique montre une structure feuilletée complexe. Les produits obtenus après découpe sont extrêmement résistants.

### Exemple N° 11

On prépare la composition suivante :

| | |
|---|---|
| Menthol liquide | 100g |
| Lécithine de soja | 2,5g |
| Eau | 40g |
| Mannitol | 240g |
| Malto-dextrine DE 11/14 | 617,5g |

On incorpore le mélange menthol + lécithine au mélange préalable des poudres puis on ajoute l'eau.

Les paramètres d'extrusion sont identiques à ceux de l'exemple N°2. On obtient les résultats suivants.

| | |
|---|---|
| Taux d'inclusion | 83% |
| Teneur en eau | 7,9% |

On obtient une forme solide, physiquement stable utilisable pour des applications du type confiserie. Le menthol est stable chimiquement.

Accessoirement l'emploi d'un menthol en inclusion solide permet de réaliser des formulations à libération différée et donc des aromatisations à effet prolongé.

### Exemple N°12

On prépare les compositions suivantes :

| | 12A | 12B |
|---|---|---|
| Mélange d'épices (*) | 100 g | 100 g |
| Eau | 43 g | 43 g |
| Mannitol | 257 g | 428,5 g |
| Malto-dextrine DE 11/14 | 600 g | 428,5 g |

| | | |
|---|---|---|
| (*) Mélange d'oléoresines de poivre, muscade, huiles essentielles d'ail, muscade, substances aromatisantes naturelles. | | |

| Températures des fourreaux (°C) : | |
|---|---|
| N°1 | 17 |
| N°2 | 75 |
| N°3 | 116 |
| N°4 | 116 |
| N°5 | 91 |
| Température de sortie (°C) | 94 |

On obtient les résultats suivants.

| | 12A | 12B |
|---|---|---|
| Taux d'inclusion | 92% | 88% |
| Teneur en eau | 7,0% | 7,3% |

Les produits obtenus après découpe deviennent en quelques heures extrêmement durs et non hygroscopiques.

La détermination par spectroscopie d'absorption UV de la teneur en pipérine a permis de contrôler la qualité de la dispersion de l'arôme dans le mélange à extruder, du produit fini obtenu, et sa conservation.

Les analyses physico-chimiques et sensorielle montrent une conservation de la puissance quasi complète sur 14 mois à température ambiante.

L'étude de la conservation de l'arôme « en situation », dans les conditions du procédé industriel d'emploi (dans une matrice protéique et amylacée, pendant 10 minutes à 95°C, 98 % d'humidité relative) montre une stabilité très supérieure à celle des formulations traditionnelles.

Des conclusions analogues ont suivi l'étude de conservation pendant 60 jours à +35°C.

### Exemple N° 13

On prépare la composition suivante :

| | |
|---|---|
| Mélange d'épices (*) | 100g |
| Eau | 30g |
| Mannitol | 160g |
| Chlorure de sodium | 50g |
| Glutamate monosodique (**) | 60g |
| Malto-dextrine DE 11/14 | 600g |

| | |
|---|---|
| (*) mélange d'oléorésines de poivre, de muscade, huiles essentielles d'ail, de muscade, substances aromatisantes naturelles, Myvérol® (5%) (E471) vendu par Eastman Kodak. | |
| (**) E621 vendu par la société Ajinomoto | |

On opère de la même manière que dans l'exemple N°12. On obtient les résultats suivants.

| | |
|---|---|
| Taux d'inclusion | 89% |
| Teneur en eau | 6,2% |

### Exemple N° 14

On prépare la composition suivante :

| | |
|---|---|
| Arôme mûre(*) | 92g |
| Lécithine desoja | 2,5 g |
| Propylèneglycol | 35g |
| Mannitol | 260g |
| Malto-dextrine DE 11/14 | 610,5g |

| | |
|---|---|
| (*) mélange de substances identiques aux naturelles : acides caprique, caproïque, butyrique, formique, isovalérianique, tiglique, valérianique, essence de myrrhe, eugénol, acetaldéhyde, phénylacétaldéhyde, hexanal, esters (acétates), alcools amylique, isoamylique, isobutylique et propylique, hexanol, gamma-delta-decalactones, sulfure de dimethyle, frambinone, hédione, ionones, maltol, furanéol, vanilline, damascone, ambrettolide. | |

Les conditions opératoires sont identiques à celles de l'exemple N°2, à l'exception près que l'on remplace l'eau par le propylèneglycol, on laisse reposer le mélange final pulvérulent à 20 °C ± 5 °C pendant 48 heures, ce qui permet la formation d'un matériau solide et compact, et on pulvérise ce dernier à l'aide d'un cutter pour obtenir un matériau sous forme de semoule. Ce matériau présente déjà une rétention de l'arôme non négligeable, c'est-à-dire que 35 % de la quantité totale de l'arôme ne peut être désorbée par lavage à l'hexane ou à l'acétonitrile.

On introduit ensuite ce matériau sous forme de semoule dans l'extrudeuse et on obtient les résultats suivants :

| | |
|---|---|
| Taux d'inclusion | 92% |
| Teneur en eau | 3,9% |

## Revendications

1. Composition de structure composite, **caractérisée en ce qu'**elle comprend une première phase amorphe d'hydrates de carbone ayant une température de transition vitreuse supérieure à la température ambiante, une deuxième phase cristalline et une troisième phase constituée d'au moins une substance choisie parmi les substances aromatiques, les substances non aromatiques volatiles et/ou sensibles aux agents extérieurs choisies parmi les extraits naturels, les composés soufrés, les actifs à usage pharmaceutique et les lipides contenant des acides gras insaturés, et leurs mélanges, dispersée à l'aide d'au moins un agent émulsifiant dans les deux autres phases.

2. Composition selon la revendication 1, **caractérisée en ce que** la phase amorphe comprend une maltodextrine présentant un dextrose équivalent compris entre 1 et 20, ou un mélange de sucres simples et d'oligosaccharides ou de polysaccharides.

3. Composition selon la revendication 2, **caractérisée en ce que** la phase amorphe comprend une maltodextrine présentant un dextrose équivalent compris entre 5 et 18, de préférence entre 11 et 14.

4. Composition selon l'une quelconque des revendications 1 à 3, **caractérisée en ce que** la phase cristalline comprend du mannitol, une cyclodextrine, un sel tel que du chlorure de sodium ou du carbonate de calcium, l'acide glutamique ou un de ses sels de métal alcalin ou alcalino-terreux, ou leurs mélanges.

5. Composition selon l'une quelconque des revendications 1 à 4, **caractérisée en ce que** les substances aromatiques sont choisies parmi les huiles essentielles, les oléorésines, les substances aromatisantes naturelles ou synthétiques, les épices et aromates, les agents de sapidité, les édulcorants et leurs mélanges.

6. Composition selon l'une quelconque des revendications 1 à 5, **caractérisée en ce que** les substances non aromatiques volatiles et/ou sensibles, aux agents extérieurs sont choisies parmi les composés polyphénoliques, les anthocyanes, le sulfure de diméthyle, la cystéine, la méthionine, l'acide ascorbique, les huiles de poisson, de bourrache ou d'onagre.

7. Composition selon l'une quelconque des revendications 1 à 6, **caractérisée en ce que** les émulsifiants sont choisis parmi les phospholipides tels que la phosphatidyl-choline, la phosphatidyl-sérine, la phosphatidyl-éthanolamine ; les mono- ou diglycérides d'acides gras en C₁₀-C₂₀ ; les esters de sorbitane, les sucroglycérides, les esters de glycérol, les esters polyglycériques, les polyricinoléates, les esters de propanediol, les lactates de stéaroyle et leurs mélanges.

8. Composition selon l'une quelconque des revendications 1 à 7, **caractérisée en ce que** l'émulsifiant est présent dans des proportions inférieures à 1 % en poids, de préférence comprises entre 0,2 et 0,6 % en poids par rapport au poids de la composition.

9. Composition selon l'une quelconque des revendications 1 à 8, **caractérisée en ce que** la composition contient de l'eau dans des proportions comprises entre 1 et 20 % en poids, de préférence inférieures à 5 % par rapport au poids total de la composition.

10. Composition selon l'une quelconque des revendications 1 à 9, **caractérisée en ce que** la composition contient en outre des matières grasses dans des proportions ne dépassant pas 10 % en poids par rapport au poids total de la composition.

11. Composition selon la revendication 10, **caractérisée en ce que** les matières grasses sont choisies parmi les triglycérides d'acides gras en C₈-C₂₀ et en particulier un mélange de triglycérides d'acides gras végétaux saturés en C₈/C₁₀ ou leurs mélanges.

12. Composition selon l'une quelconque des revendications 1 à 11, **caractérisée en ce que** la composition contient en outre un ou plusieurs polyols choisis parmi le propylèneglycol, le glycérol et des alcools alcoxylés.

13. Composition selon la revendication 12, **caractérisée en ce que** les polyols sont présents en une quantité comprise entre 1 et 10 % en poids, de préférence entre 2 et 5 % en poids, par rapport au poids total de la composition.

14. Composition selon l'une quelconque des revendications 1 à 13, **caractérisée en ce que** les phases amorphe et cristalline constituent de 60 à 90 % du poids total de la composition.

15. Composition selon l'une quelconque des revendications 1 à 14, **caractérisée en ce que** le rapport pondéral de la phase amorphe à la phase cristalline est compris entre 50:50 et 70:30.

16. Composition selon l'une quelconque des revendications 1 à 15, **caractérisée en ce que** la troisième phase représente de 5 à 40 % du poids total de la composition.

17. Utilisation d'une composition selon l'une quelconque des revendications 1 à 16, pour le stockage et la conservation d'arômes alimentaires ou pharmaceutiques.

18. Utilisation d'une composition selon l'une quelconque des revendications 1 à 16, dans des produits alimentaires.

19. Utilisation d'une composition selon l'une quelconque des revendications 1 à 16, dans des compositions cosmétiques.

20. Procédé de fabrication de compositions à structure composite selon l'une quelconque des revendications 1 à 16, **caractérisé en ce qu'**il comprend les étapes suivantes consistant à :
(a) d'une part, mélanger les poudres d'hydrates de carbone de la phase amorphe et de composés cristallins,
(b) d'autre part, mélanger l'agent émulsifiant avec au moins une substance choisie parmi les substances aromatiques, les substances non aromatiques volatiles et/ou sensibles aux agents extérieurs choisies parmi les extraits naturels, les composés soufrés, les actifs à usage pharmaceutique et les lipides contenant des acides gras insaturés, et leurs mélanges, puis à ajouter l'eau, ou au moins un polyol liquide ou fusible dans les conditions du procédé, ou un mélange eau/polyol(s) liquide(s) ou fusible(s) dans les conditions du procédé, de manière à former une émulsion,
(c) incorporer lentement sous agitation l'émulsion au mélange de poudres, et à
(d) procéder ensuite à l'extrusion du mélange de façon à obtenir à la sortie une composition à structure composite comportant une phase amorphe vitreuse et une phase cristalline, dans lesquelles est dispersée au moins une substance choisie parmi les substances aromatiques, les substances non aromatiques volatiles et/ou sensibles aux agents extérieurs, et leurs mélanges.

21. Procédé de fabrication de compositions à structure composite selon l'une quelconque des revendications 1 à 16, **caractérisé en ce qu'**il comprend les étapes suivantes consistant à :
(a) d'une part, mélanger les poudres d'hydrates de carbone de la phase amorphe et de composés cristallins,
(b') d'autre part, mélanger l'agent émulsifiant avec au moins une substance choisie parmi les substances aromatiques, les substances non aromatiques volatiles et/ou sensibles aux agents extérieurs choisies parmi les extraits naturels, les composés soufrés, les actifs à usage pharmaceutique et les lipides contenant des acides gras insaturés, et leurs mélanges,
(c') incorporer lentement sous agitation le mélange de l'étape (b') au mélange de poudres,
(d') ajouter l'eau, ou au moins un polyol liquide ou fusible dans les conditions du procédé, ou un mélange eau/polyol(s) liquide(s) ou fusible(s) dans les conditions du procédé, et à
(e') procéder ensuite à l'extrusion du mélange de façon à obtenir à la sortie une composition à structure composite comportant une phase amorphe vitreuse et une phase cristalline, dans lesquelles est dispersée au moins une substance choisie parmi les substances aromatiques, les substances non aromatiques volatiles et/ou sensibles aux agents extérieurs, et leurs mélanges.

22. Procédé selon la revendication 20 ou 21, **caractérisé en ce que** l'on conserve, à température ambiante, le mélange obtenu à l'étape (c) ou (d') pendant un à cinq jours, de préférence 48 heures, et **en ce que** l'on broie ledit mélange avant extrusion.

23. Procédé selon l'une quelconque des revendication 20 à 22, **caractérisé en ce que** le mélange à extruder est introduit à température ambiante dans l'extrudeuse, puis porté à une température comprise entre 100 et 140 °C, refroidi jusqu'à une température de 80-90 °C, puis extrudé à une température de 75 à 105 °C.

## Patentansprüche

1. Kompositzusammensetzung, **dadurch gekennzeichnet, daß** sie eine erste amorphe Kohlenhydratphase mit einer Glasübergangstemperatur, die oberhalb der Raumtemperatur liegt, eine zweite kristalline Phase und eine dritte Phase, die aus mindestens einer Substanz aus der Gruppe aromatische Substanzen, flüchtige und/oder gegenüber Umweltfaktoren empfindliche nichtaromatische Substanzen aus der Gruppe der natürlichen Extrakte, schwefelhaltigen Verbindungen, pharmazeutischen Wirkstoffen und Lipide, die ungesättigte Fettsäuren enthalten, sowie deren Mischungen umfaßt, wobei die dritte Phase mit Hilfe eines Emulgators in den beiden anderen Phasen dispergiert ist.

2. Zusammensetzung nach Anspruch 1, **dadurch gekennzeichnet, daß** die amorphe Phase ein Maltodextrin mit einem Dextroseäquivalent zwischen 1 und 20 oder eine Mischung von einfachen Zuckern oder Oligosacchariden oder Polysacchariden umfaßt.

3. Zusammensetzung nach Anspruch 2, **dadurch gekennzeichnet, daß** die amorphe Phase ein Maltodextrin mit einem Dextroseäquivalent zwischen 5 und 18, vorzugsweise zwischen 11 und 14, umfaßt.

4. Zusammensetzung nach einem der Ansprüche 1 bis 3, **dadurch gekennzeichnet, daß** die kristalline Phase Mannit, ein Cyclodextrin, ein Salz wie Natriumchlorid oder Calciumcarbonat, Glutaminsäure oder eines ihrer Alkali- oder Erdalkalisalze oder Mischungen davon umfaßt.

5. Zusammensetzung nach einem der Ansprüche 1 bis 4, **dadurch gekennzeichnet, daß** die aromatischen Substanzen aus der Gruppe der ätherischen Öle, Ölharze, natürlichen oder synthetischen Aromastoffe, der Geschmacksstoffe und Aromen, der Geschmacksverstärker, der Süßstoffe oder deren Mischungen stammen.

6. Zusammensetzung nach einem der Ansprüche 1 bis 5, **dadurch gekennzeichnet, daß** die nichtaromatischen flüchtigen und/oder gegenüber Umwelteinflüssen empfindlichen Substanzen aus der Reihe der Polyphenolverbindungen, Anthocyane, Dimethylsulfit, Cystein, Methionin, Ascorbinsäure, Fischöl, Borretschöl oder Nachtkerzenöl stammen.

7. Zusammensetzung nach einem der Ansprüche 1 bis 6, **dadurch gekennzeichnet, daß** die Emulgatoren aus der Reihe der Phospholipide wie Phosphatidylcholin, Phosphatidylserin, Phosphatidylethanolamin; Mono- oder Diglyceride von C₁₀-C₂₀-Fettsäuren; Sorbitanester, Sucroglyceride, Glycerinester, Polyglycerinester, Polyricinoleate, Propandiolester, Stearoyllactate und deren Mischungen stammen.

8. Zusammensetzung nach einem der Ansprüche 1 bis 7, **dadurch gekennzeichnet, daß** der Emulgator in Mengen von weniger als 1 Gew.-%, vorzugsweise zwischen 0,2 und 0,6 Gew.-% in bezug auf das Gewicht der Zusammensetzung, vorliegt.

9. Zusammensetzung nach einem der Ansprüche 1 bis 8, **dadurch gekennzeichnet, daß** die Zusammensetzung Wasser in Mengen zwischen 1 und 20 Gew.-%, vorzugsweise von weniger als 5% in bezug auf das Gesamtgewicht der Zusammensetzung, enthält.

10. Zusammensetzung nach einem der Ansprüche 1 bis 9, **dadurch gekennzeichnet, daß** die Zusammensetzung weiterhin Fettkörper in einem Anteil von maximal 10 Gew.-% in bezug auf das Gesamtgewicht der Zusammensetzung, enthält.

11. Zusammensetzung nach Anspruch 10, **dadurch gekennzeichnet, daß** die Fettkörper aus der Reihe der C₈-C₂₀-Fettsäurentriglyceride, insbesondere einer Mischung von pflanzlichen gesättigten C₈-C₁₀-Fettsäuretriglyceriden oder deren Mischungen stammen.

12. Zusammensetzung nach einem der Ansprüche 1 bis 11, **dadurch gekennzeichnet, daß** die Zusammensetzung weiterhin ein oder mehrere Polyol(e) aus der Reihe Propylenglycol, Glycerin und alkoxylierte Alkohole enthält.

13. Zusammensetzung nach Anspruch 12, **dadurch gekennzeichnet, daß** die Polyole in einer Menge zwischen 1 und 10 Gew.-%, vorzugsweise zwischen 2 und 5 Gew.-%, in bezug auf das Gesamtgewicht der Zusammensetzung, ausmachen.

14. Zusammensetzung nach einem der Ansprüche 1 bis 13, **dadurch gekennzeichnet, daß** die amorphe Phase und die kristalline Phase 60 bis 90% des Gesamtgewichts der Zusammensetzung ausmachen.

15. Zusammensetzung nach einem der Ansprüche 1 bis 14, **dadurch gekennzeichnet, daß** das Gewichtsverhältnis der amorphen Phase zu der kristallinen Phase zwischen 50:50 und 70:30 liegt.

16. Zusammensetzung nach einem der Ansprüche 1 bis 15, **dadurch gekennzeichnet, daß** die dritte Phase 5 bis 40% des Gesamtgewichts der Zusammensetzung ausmacht.

17. Verwendung einer Zusammensetzung nach einem der Ansprüche 1 bis 16 zur Aufbewahrung und Konservierung von Nahrungsmittelaromen oder pharmazeutischen Aromen.

18. Verwendung einer Zusammensetzung nach einem der Ansprüche 1 bis 16 in Nahrungsmittelprodukten.

19. Verwendung einer Zusammensetzung nach einem der Ansprüche 1 bis 16 in Kosmetikzusammensetzungen.

20. Verfahren zur Herstellung von Kompositzusammensetzungen nach einem der Ansprüche 1 bis 16, **dadurch gekennzeichnet, daß** es die folgenden Schritten umfaßt, die darin bestehen, daß man
(a) erstens die Pulver der Kohlenhydrate der amorphen Phase und der kristallinen Verbindungen mischt,
(b) zweitens den Emulgator mit mindestens einer Substanz aus der Reihe aromatische Substanzen, flüchtige und/oder gegenüber Umweltfaktoren empfindliche nichtaromatische Substanzen aus der Gruppe der natürlichen Extrakte, schwefelhaltigen Verbindungen, pharmazeutischen Wirkstoffen und Lipide, die ungesättigte Fettsäuren enthalten, sowie deren Mischungen mischt, anschließend das Wasser oder mindestens ein Polyol, das unter den Verfahrensbedingungen flüssig oder schmelzbar ist, oder eine Mischung von Wasser und Polyol(en), das bzw. die unter den Verfahrensbedingungen flüssig oder schmelzbar ist/sind, zugibt, so daß man zu einer Emulsion gelangt,
(c) diese Emulsion langsam unter Rühren in die Pulvermischung einarbeitet, sowie
(d) anschließend die Mischung so extrudiert, daß man beim Austritt eine Kompositzusammensetzung erhält, die eine amorphe glasartige Phase und eine kristalline Phase umfaßt, in denen mindestens eine Substanz aus der Reihe aromatische Substanzen, flüchtige und/oder gegenüber Umwelteinflüssen empfindliche nichtaromatische Substanzen und deren Mischungen dispergiert ist.

21. Verfahren zur Herstellung von Kompositzusammensetzungen nach einem der Ansprüche 1 bis 16, **dadurch gekennzeichnet, daß** es die folgenden Schritten umfaßt, die darin bestehen, daß man
(a) erstens die Pulver der Kohlenhydrate der amorphen Phase und der kristallinen Verbindungen mischt,
(b') zweitens den Emulgator mit mindestens einer Substanz aus der Reihe aromatische Substanzen, flüchtige und/oder gegenüber Umweltfaktoren empfindliche nichtaromatische Substanzen aus der Gruppe der natürlichen Extrakte, schwefelhaltigen Verbindungen, pharmazeutischen Wirkstoffen und Lipide, die ungesättigte Fettsäuren enthalten, sowie deren Mischungen mischt.
(c') die Mischung aus Schritt (b') langsam unter Rühren in die Pulvermischung einarbeitet,
(d') das Wasser oder mindestens ein Polyol, das unter den Verfahrensbedingungen flüssig oder schmelzbar ist, oder eine Mischung von Wasser und Polyol(en), das bzw. die unter den Verfahrensbedingungen flüssig oder schmelzbar ist/sind, zugibt, sowie
(e') anschließend die Mischung so extrudiert, daß man beim Austritt eine Kompositzusammensetzung erhält, die eine amorphe glasartige Phase und eine kristalline Phase umfaßt, in denen mindestens eine Substanz aus der Reihe aromatische Substanzen, flüchtige und/oder gegenüber Umwelteinflüssen empfindliche nichtaromatische Substanzen und deren Mischungen dispergiert ist.

22. Verfahren nach Anspruch 20 oder 21, **dadurch gekennzeichnet, daß** man die in Schritt (c) oder (d') erhaltene Mischung ein bis fünf Tage, vorzugsweise 48 Stunden, bei Raumtemperatur aufbewahrt und daß man diese Mischung vor der Extrusion mahlt.

23. Verfahren nach einem der Ansprüche 20 bis 22, **dadurch gekennzeichnet, daß** die zu extrudierende Mischung in den Extruder bei Raumtemperatur eingespeist wird, anschließend auf eine Temperatur zwischen 100 und 140°C gebracht wird, auf eine Temperatur von 80-90°C abgekühlt wird und dann bei einer Temperatur von 75-105°C extrudiert wird.

## Claims

1. Composite composition, **characterized in that** it contains a first amorphous phase of carbohydrates having a glass transition temperature above room temperature, a second crystalline phase and a third phase composed of at least one substance selected from amongstst aromatic substances, nonaromatic substances which are volatile and/or sensitive to external factors and which are selected from amongst natural extracts, sulphur-containing compounds, active ingredients for pharmaceutical use and lipids containing unsaturated fatty acids, and mixtures of these aromatic and nonaromatic substances, which third phase is dispersed in the two other phases with the aid of at least one emulsifier.

2. A composition according to Claim 1, **characterized in that** the amorphous phase comprises a maltodextrin with a dextrose equivalent of between 1 and 20, or a mixture of simple sugars and oligosaccharides or polysaccharides.

3. A composition according to Claim 2, **characterized in that** the amorphous phase comprises a maltodextrin with a dextrose equivalent of between 5 and 18, preferably between 11 and 14.

4. Composition according to any of Claims 1 to 3, **characterized in that** the crystalline phase comprises mannitol, a cyclodextrin, a salt such as sodium chloride or calcium carbonate, glutamic acid or one of its alkali metal or alkaline earth metal salts, or mixtures of these.

5. Composition according to any of Claims 1 to 4, **characterized in that** the aromatic substances are selected from amongstst essential oils, oleoresins, natural or synthetic aromatizing substances, flavours and aromas, flavour enhancers, sweeteners and mixtures of these.

6. Composition according to any of Claims 1 to 5, **characterized in that** the nonaromatic substances which are volatile and/or sensitive to external factors are selected from amongstst the polyphenolic compounds, anthocyanins, dimethyl sulphide, cysteine, methionine, ascorbic acid, fish oils, borage oil or evening primrose oil.

7. Composition according to any of Claims 1 to 6, **characterized in that** the emulsifiers are selected from amongstst phospholipids such as phosphatidyl-choline, phosphatidylserine, phosphatidylethanolamine; mono- or diglycerides of C₁₀-C₂₀-fatty acids; sorbitan esters, sugar glycerides, glycerol esters, polyglyceryl esters, polyricinoleates, propanediol esters, stearoyl lactates, and mixtures of these.

8. Composition according to any of Claims 1 to 7, **characterized in that** the emulsifier is present in amounts of less than 1% by weight, preferably between 0.2 and 0.6% by weight, based on the weight of the composition.

9. Composition according to any of Claims 1 to 8, **characterized in that** the composition comprises water in amounts of between 1 and 20% by weight, preferably less than 5%, based on the total weight of the composition.

10. Composition according to any of Claims 1 to 9, **characterized in that** the composition furthermore comprises fatty substances in amounts of not more than 10% by weight relative to the total weight of the composition.

11. Composition according to Claim 10, **characterized in that** the fatty substances are selected from amongstst C₈-C₂₀-fatty acid triglycerides, in particular a mixture of saturated vegetable C₈-C₁₀-fatty acid triglycerides, or mixtures of these.

12. Composition according to any of Claims 1 to 11, **characterized in that** the composition furthermore comprises one or more polyols selected from amongstst propylene glycol, glycerol and alkoxylated alcohols.

13. Composition according to Claim 12, **characterized in that** the polyols are present in an amount of between 1 and 10% by weight, preferably between 2 and 5% by weight, relative to the total weight of the composition.

14. Composition according to any one of Claims 1 to 13, **characterized in that** the amorphous phase and the crystalline phase account for 60 to 90% of the total weight of the composition.

15. Composition according to any of Claims 1 to 14, **characterized in that** the weight ratio of the amorphous phase to the crystalline phase is between 50:50 and 70:30.

16. Composition according to any of Claims 1 to 15, **characterized in that** the third phase represents 5 to 40% of the total weight of the composition.

17. Use of a composition according to any of Claims 1 to 16 for the storage and preservation of food or pharmaceutical aromas.

18. Use of a composition according to any of Claims 1 to 16 in food products.

19. Use of a composition according to any of Claims 1 to 16 in cosmetic compositions.

20. Process for the preparation of composite compositions according to any of Claims 1 to 16, **characterized in that** it comprises the following steps consisting of:
(a) firstly, mixing the carbohydrate powders of the amorphous phase and of crystalline compounds,
(b) secondly, mixing the emulsifier with at least one substance selected from amongst aromatic substances, nonaromatic substances which are volatile and/or sensitive to external factors and which are selected from amongst natural extracts, sulphur-containing compounds, active ingredients for pharmaceutical use and lipids containing unsaturated fatty acids, and mixtures of these aromatic and nonaromatic substances, then adding the water or at least one polyol which is liquid or meltable under the conditions of the process, or a mixture of water and polyol(s) which is/are liquid or meltable under the conditions of the process, in order to obtain an emulsion,
(c) slowly and with stirring incorporating the emulsion into the powder mixture, and
(d) then extruding the mixture so as to obtain, upon leaving, a composite composition comprising a vitreous amorphous phase and a crystalline phase, in which phases there is dispersed at least one substance selected from amongst the aromatic substances, nonaromatic substances which are volatile and/or sensitive to external factors, and mixtures of these.

21. Process for the preparation of composite compositions according to any of Claims 1 to 16, **characterized in that** it comprises the following steps consisting of:
(a) firstly, mixing the carbohydrate powders of the amorphous phase and of crystalline compounds,
(b') secondly, mixing the emulsifier with at least one substance selected from amongst aromatic substances, nonaromatic substances which are volatile and/or sensitive to external factors and which are selected from amongst natural extracts, sulphur-containing compounds, active ingredients for pharmaceutical use and lipids containing unsaturated fatty acids, and mixtures of these aromatic and nonaromatic substances,
(c') slowly and with stirring incorporating the mixture of step (b') into the powder mixture, and
(d') adding the water or at least one polyol which is liquid or meltable under the conditions of the process, or a mixture of water and polyol(s) which is/are liquid or meltable under the conditions of the process, and
(e') then extruding the mixture so as to obtain, upon leaving, a composite composition comprising a vitreous amorphous phase and a crystalline phase, in which phases there is dispersed at least one substance selected from amongst the aromatic substances, nonaromatic substances which are volatile and/or sensitive to external factors, and mixtures of these.

22. Process according to Claim 20 or 21, **characterized in that** the mixture obtained in step (c) or (d') is left for one to five days, preferably 48 hours, at room temperature and **in that** said mixture is ground before extrusion.

23. Process according to any of Claims 20 to 22, **characterized in that** the mixture to be extruded is introduced into the extruder at room temperature and then brought to a temperature of between 100 and 140°C, cooled to a temperature of 80-90°C and then extruded at a temperature of 75 to 105°C.
